# EUROPEAN PATENT APPLICATION

(11) **EP 4 216 615 A1**
(43) Date of publication of application: **26.07.2023**
(21) Application number: 22215761.2
(22) Date of filing: 22.12.2022
(51) Int. Cl.: H04W 52/02, H04L 5/00, H04W 76/00, H04W 88/00

(54) **POWER MANAGEMENT INDICATOR TRANSMITTED OVER COMMUNICATION LINK AND RELATING TO OTHER COMMUNICATION LINK**

(30) Priority: 24.01.2022 US 202217582448
(71) Applicant: Avago Technologies International Sales Pte. Limited, Singapore 768923 (SG)
(72) Inventor: Dasam, Somaraju, 560100 Bengaluru (IN); Tadahal, Shivkumar, 560100 Bengaluru (IN); Upmanyu, Rohit, 560100 Bengaluru (IN); Damodaran, Deepak Kumar, 560100 Bengaluru (IN); Gupta, Raghvendra, 560100 Bengaluru (IN)
(74) Representative: Dilg, Haeusler, Schindelmann Patentanwaltsgesellschaft mbH

(57) **Abstract**

A method for operating a multi-link station and an access point being configured for communicating with each other, wherein the method comprises transmitting a power management indicator between the multi-link station and the access point over a first communication link, the power management indicator being indicative of a power management state of a second communication link.

## Description

### Field of the Disclosure

This disclosure generally relates to systems and methods for operating a multi-link station and an access point being configured for communicating with each other. Furthermore, this disclosure relates to a multi-link station, an access point, a WiFi chip, and a WiFi network.

### Background of the Disclosure

The Institute of Electrical and Electronics Engineers (IEEE) 802.11 standard is part of the IEEE 802 set of local area network (LAN) protocols and specifies the set of media access control (MAC) and physical layer (PHY) protocols for implementing wireless LAN (WLAN) WiFi computer communication in various frequencies. The frequency bands of interest include, but are not limited to, 2.4 GHz, 5 GHz, 6 GHz and 60 GHz frequency bands. IEEE 802.11be, or extremely high throughput (EHT), is the potential next amendment of the 802.11 IEEE standard. It can build upon 802.11ax, focusing on WLAN indoor and outdoor operation with stationary and pedestrian speeds.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 illustrates a flowchart of a method for operating a multi-link station and an access point being configured for communicating with each other according to an exemplary embodiment;
FIG. 2 illustrates a WiFi network comprising an access point being communicatively coupled with a multi-link station according to an exemplary embodiment;
FIG. 3A illustrates communication over a WiFi network comprising an access point and a multi-link station for comparison with the architecture according to FIG. 3B;
FIG. 3B illustrates communication over a WiFi network comprising an access point and a multi-link station according to an exemplary embodiment;
FIG. 4A illustrates communication over a WiFi network comprising an access point and a multi-link station for comparison with the architecture according to FIG. 4B;
FIG. 4B illustrates communication over a WiFi network comprising an access point and a multi-link station according to another exemplary embodiment;
FIG. 5 illustrates a communication message transmitted over a WiFi network from a multi-link station to an access point according to an exemplary embodiment;
FIG. 6 illustrates a power management bitmap forming part of a data block of the communication message of FIG. 5;
FIG. 7 is a diagram illustrating an embodiment of a wireless communication system in which some aspects of the subject technology can be implemented.

The details of various embodiments of the methods and systems are set forth in the accompanying drawings and the description below.

### Detailed Description

Below are detailed descriptions of various concepts related to, and embodiments of, techniques, approaches, methods, apparatuses, and systems for multi-link power management indication of a multi-link station and an access point operating in accordance with IEEE 802.11. The various concepts introduced above and discussed in detail below can be implemented in any of numerous ways, as the described concepts are not limited to any particular manner of implementation. Examples of specific embodiments and applications are provided primarily for illustrative purposes.

In an embodiment, a method for operating a multi-link station and an access point being configured for communicating with each other is provided, wherein the method comprises transmitting a power management indicator between the multi-link station and the access point over a first communication link, the power management indicator being indicative of a power management state of a second communication link (or any other communication link).

In another embodiment, a multi-link station configured for communicating with an access point is provided, wherein the multi-link station comprises a communication interface, and processing circuitry coupled to the communication interface and configured for transmitting a power management indicator between the multi-link station and the access point over a first communication link, the power management indicator being indicative of a power management state of a second communication link.

In still another embodiment, an access point configured for communicating with a multi-link station is provided, wherein the access point comprises a communication interface, and processing circuitry coupled to the communication interface and configured for receiving a power management indicator from the multi-link station over a first communication link, the power management indicator being indicative of a power management state of a second communication link, and subsequently operating with the multi-link station in accordance with the received power management indicator.

In still another embodiment, a WiFi network is provided which comprises a multi-link station, and an access point, wherein the access point and the multi-link station are configured for transmitting a power management indicator from the multi-link station to the access point over a first communication link, the power management indicator being indicative of a power management state of a second communication link, and subsequently operating between the multi-link station and the access point in accordance with the received power management indicator.

In still another embodiment, a WiFi chip for a multi-link station configured for communicating with an access point is provided, wherein the WiFi chip is configured for transmitting a power management indicator between the multi-link station and the access point (in particular from the multi-link station to the access point) over a first communication link, the power management indicator being indicative of a power management state of a second communication link.

In the context of the present application, the term "WiFi" may denote in particular a wireless network protocol, in particular a wireless local area network (WLAN) protocol, which may be based on one or more of the IEEE 802.11 standards. Such a wireless network protocol may be used for local area networking of devices and internet access, allowing nearby digital devices to exchange data by radio waves.

In the context of the present application, the term "station" (which may be abbreviated as "STA") may denote in particular a device that has the capability to use an IEEE 802.11 protocol for wireless communication. For example, a station may be a mobile phone, a laptop, a desktop personal computer (PC), a vehicle (in particular a car), a traffic equipment (in particular a street light or a traffic light), or a personal digital assistant (PDA). A station may be fixed, mobile or portable. A station may function as a transmitter and/or receiver based on its transmission characteristics. For example, a station may be any device that contains an IEEE 802.11-conformant media access control (MAC) and physical layer (PHY) interface to the wireless medium.

In the context of the present application, the term "multi-link station" may denote in particular a station being configured for operating via a plurality of separate communication links. Hence, a multi-link station may have a multi-link operation (MLO) capability. Each link by which a multi-link station may communicate with an access point may be mapped to a band (such as a frequency band around 2.4 GHz, 5 GHz, 6 GHz) and a channel (which may define a sub-band, e.g. a narrower frequency range, of an assigned band, such as a 10 MHz, 20MHz, 40MHz, 80MHz or any other such range within the frequency band). MLO capability of a multi-link station may provide high throughput by splitting data flow over different links, may provide a low latency due to the possibility of accessing different links in parallel (e.g. transmitting data simultaneously over different links including ones with lower latency), may provide a high reliability by utilizing multiple links (e.g. retransmitting packets via different links for reliability, or dynamically steering packet flows based on congestion or losses), and may assign a data flow to different links based on the needs of a specific application (e.g. assigning real-time communications such as video conferencing to a low latency link, and assigning large payload communications such as file transfers to a high reliability link).

In the context of the present application, the term "access point" (which may be abbreviated as "AP") may denote in particular a networking hardware device that allows other WiFi devices, in particular a station, to connect to a wired network. In some implementations, an access point may be a standalone device separate from and connected to a router (e.g. via a wired connection); in other implementations, an access point may comprise a router or be an integral component of the router itself. For instance, an access point may be stationary. For example, an access point may provide a switching function and/or a routing function. An access point may function as a gateway to the internet and may manage one or more wireless clients (for instance a TV) in a certain network, for instance in a home network. For instance, such an access point may be implemented in a vehicle (in particular a car), a traffic equipment (in particular a street light or a traffic light), etc.

In the context of the present application, the term "communication link" may denote in particular a communication path or connection between a station and an access point over which messages, signals and/or other data may be transmitted between station and access point. Different communication links may be used independently from each other for communication. For example, a link may use a channel of a band. Such a band may correspond to a frequency range (for example around 2.4 GHz, around 5 GHz, or around 6 GHz), whereas a channel may relate to a sub-band of frequencies of a band (e.g. overlapping or non-overlapping subbands with sizes from 10MHz to 160MHz around predetermined center frequencies within 1 GHz band from approximately 5GHz to GHz for 802.1 1a/h/j/n/ac/ax or similar protocols).

In the context of the present application, the term "power management indicator" may denote in particular any data structure (such as a frame, a bitmap, a single bit, a communication signal, a communication message, a power management signal, etc.) indicating the way power management is or shall be carried out for a specific link via which a multi-link station may communicate with one or more access points and optionally with at least one other entity. Thus, the power management indicator may indicate a power management state concerning an assigned link. For instance, the power management indicator may indicate whether a communication link between a multi-link station and an access point is presently operated in a power saving mode or in an active communication mode without power saving operation. Hence, the power management (PM) indicator may be indicative of an energy-saving power management state (for example PM=1) or may be indicative of an energy-consuming active communication power management state (for example PM=0). In some implementations, additional power management states may be identified (e.g. hibernation or sleep, low power, high power, etc.). Power management may be advantageous for a multi-link station, which may be a battery-powered device.

In the context of the present application, the term "power management state of a link" may denote in particular a present operational condition of a communication link between a multi-link station and an access point in terms of power management. For example, the power management state may indicate whether a specific communication link between a multi-link station and an access point is operated in an active power mode or in a doze mode. In this context, the term "doze mode" may particularly denote a power saving mode in which a respective communication link is operated with low power consumption or even no power consumption. During such a doze or low-power mode, the power consumption of the station (which may be a battery-powered station) may be advantageously reduced (e.g. by reducing power to or disabling amplifiers or signal generators, disabling reception or transmission hardware, etc.). The doze mode or an active mode of a communication link may be adjusted by a corresponding power management state of a power management indicator communicated between station and access point(s). Such a power management state may have a logical value "1" (PM=1) when the doze mode is activated or may have a logical value "0" (PM=0) when the doze mode is deactivated and/or an active mode is activated. However, any other values, attributes and/or conditions of the power management state may be used in other exemplary embodiments.

In the context of the present application, the term "operating in accordance with the received power management indicator" may denote in particular that a collaboration or cooperation between multi-link station and access point may be adjusted to comply with the power management indicator. This may involve for example activation or deactivation of communication between multi-link station and access point. For example, communication or non-communication or a certain mode of communication between multi-link station and access point over a specific communication link may be executed based on the power management indicator communicated for said communication link. When a link is deactivated between multi-link station and access point, it is for instance also possible that the multi-link station temporarily communicates with another entity than said access point. In some implementations, a state may be maintained for the communication link such that, if or when a power management state of the multi-link station or access point is subsequently changed, communications may be resumed via the communication link without performing additional link initialization steps (e.g. synchronization, handshaking, or other such methods).

Generally, embodiments of the systems and methods discussed herein may allow to use any communication link between a multi-link station and an access point for transmitting information characterizing a power management state of any other communication link between the multi-link station and the access point. Hence, in such embodiments, a certain communication link is not limited to transmitting information indicative of its own power management state concerning communication between the multi-link station and the access point over said communication link, but may be used as well for indicating the power management state of one or more other communication links. This may increase the flexibility of using multiple communication links between a station and an access point, and any appropriate (for example presently free) communication link can used for indicating a power management state relating also to one or more other communication links.

It is to be understood that the number of the respective link (such as first or second, etc.) is only mentioned for the sake of clarity (i.e. for distinguishing links), but is not to be understood as limiting. For instance, the "first link" or the "second link" may be any link. In particular, it is possible to use any link to indicate a power management state. It may also be possible to indicate the power management state of all links with one power management indicator. For example, there can be more than two communication links.

Various advantageous embodiments are possible with the described communication architecture in terms of power management: in particular, such an approach may also allow the transmission of a power management indicator over one communication link characterizing a power management state of a plurality of communication links between a multi-link station and an access point. Such a multi-link power management indicator may speed up the power management communication, and may also reduce the number of power management transmissions relative to embodiments using separate power management indicator transmissions for each communication link. Another advantageous embodiment may relate to an efficient scan mechanism for scanning (for example, but not limited to, in terms of roaming) a communication environment of a multi-link station concerning one or more potential communication partner access points using multi-link-power management in a multi-link setup. This may allow systems to perform accelerated scanning by eliminating having to first transmit multiple power management indicators over different communication links. In yet another embodiment, the described power management architecture may also be particularly advantageous for other multi-link applications, for example Multi-Link Single Radio (MLSR) applications, such as in particular enhanced Multi-Link Single Radio (eMLSR), or TDM (time-division multiplexing) Multi-Role applications. Also such an embodiment may reduce the time spent and/or number of transmissions utilized for power management and may thereby render wireless communication more efficient. Thus, exemplary embodiments may for example decrease the scan time, may facilitate faster roaming, and/or may increase the on-time duration for instance in TDM Multi-Role use cases.

More specifically, exemplary embodiments may provide a system, a method, and constituents for flexible power management with a multi-link station using any desired communication link with an access point for transmitting a power management indicator concerning the same and/or any other different communication link. As part of a multi-link operation in an IEEE 802.11 protocol (for example an IEEE 802.11be protocol), all affiliated stations (STAs) in an STA MLD (multi-link device) may establish a connection with all affiliated access points (APs) in an AP MLD on different communication links and may transmit information indicating a power management of the communication links in a very flexible way. For example, an MLD STA can do power management on each of the communication links independently.

For example, exemplary embodiments may be used for an automotive application. For instance, an automobile may be equipped with a station configured according to an exemplary embodiment. Such an automobile-related station may be communicatively coupled with a traffic equipment, such as a street light or a traffic light. Said traffic equipment may be provided with an access point configured according to an exemplary embodiment. When the automobile passes the traffic equipment, a wireless communication between the automobile and the traffic equipment may occur, as described herein. For example, embodiments may be applied to vehicle-to-vehicle communication, more generally to vehicle-to-everything communication. For instance, the AP-STA communication for an automotive application may be made in accordance with an IEEE 802.1 1p standard. Thus, exemplary embodiments may be used in a wireless access in vehicular environments (WAVE) configuration.

In the following, further exemplary embodiments of the method, the multi-link station, the access point, the WiFi chip, and the WiFi network will be explained:

In an embodiment, said power management indicator is also indicative of a power management state of the first communication link. Although embodiments are not limited to such an approach, it may also be advantageously possible in a preferred embodiment to use a certain communication link for transmitting information about the power management state of said communication link and about the power management state of at least one further communication link. The transmission of a multi-link power management indicator over one communication link may significantly accelerate the process of communicating a power management indicator concerning multiple links, e.g. defining the power management states of plural links between a multi-link station and a respective access point, relative to individually communicating a power management indicator for each link. Descriptively speaking, the power management indicator may be a multi-link power management indicator indicating the power management state of a plurality of communication links while being transmitted over only one communication link.

In an embodiment, the power management indicator is additionally indicative of a power management state of one or more further communication links. Hence, the transmitted power management information may be not just for the second communication link. For example, it can be for a number N of links, wherein N can be any integer number greater than or equal to 1.

In an embodiment, said power management indicator comprises one of the group comprising a single power management bit indicating the power management state of both the first communication link and the second communication link, and a sequence of power management bits each indicating the power management state of an assigned one of the first communication link and the second communication link. Hence, a single bit may be sufficient for transmitting power management information concerning a plurality of communication links when the power management state of all said communication links is the same. Even if the power management states of different communication links are different, a short sequence of power management bits submitted together may indicate power management states of said links in an efficient way.

In an embodiment, the first communication link and the second communication link relate to different bands or relate to different channels of the same band. For instance, different bands may relate to a different frequency ranges of wireless communication. Each band may be subdivided into a plurality of sub-bands defining a plurality of channels for each band. Any communication link used as a communication connection for communication between a station and an access point may use one of different channels of the same band or of different bands.

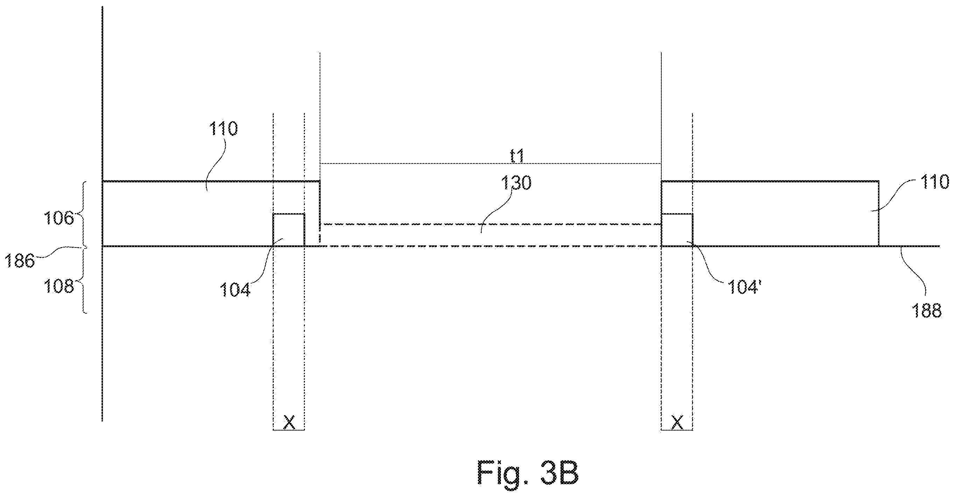

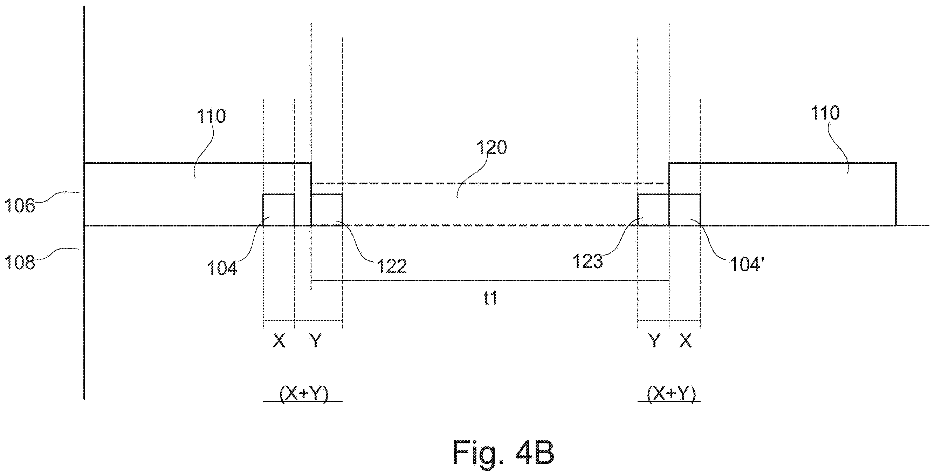

In an embodiment, the method comprises transmitting the power management indicator from the multi-link station to the access point before switching to another operation mode of the multi-link station. During said other operation mode, the multi-link station may communicate with another entity than said access point. Correspondingly, multi-link station and/or the WiFi network may be configured for transmitting the power management indicator from the multi-link station to the access point before switching to another operation mode of the multi-link station during which the multi-link station communicates with another entity than said access point. Additionally or alternatively, the method may comprise and/or at least one of the multi-link station and the WiFi network may be configured for transmitting the power management indicator from the multi-link station to the access point after switching from another operation mode of the multi-link station during which the multi-link station communicates with another entity than said access point. In said other operation mode, the multi-link station may for example communicate with one or more other access points, for example during a scanning or roaming process (as for instance in FIG. 3B, discussed in more detail below). In another embodiment, said other operation mode (for instance a concurrent mode of operation) may correspond to the provision of an additional service by the multi-link station being different from a service provided by the communication between the multi-link station and the access point. Still referring to the previously mentioned embodiment, the additional service may be provided over another channel than the channel used for communication between the multi-link station and the access point (as for instance in FIG. 4B, described below).

In an embodiment, the method comprises and/or at least one of the multi-link station and the WiFi network is configured for transmitting the power management indicator as a single power management frame. In the context of the present application, the term "frame" may denote a digital data transmission unit, in particular a consecutive sequence of bits. By using only a single frame transmitted over a single communication link for indicating the power management state of plural communication links (in particular including or not including the communication link over which the frame is transmitted) as opposed to a plurality of frames transmitted over a plurality of communication links (each indicating power management of only one link), efficient power management may be made possible.

In an embodiment, the method comprises and/or at least one of the multi-link station and the WiFi network is configured for transmitting the power management indicator from the multi-link station to the access point. Thus, the multi-link station may be the active communication entity communicating the power management state of one or multiple communication links to the access point. Correspondingly, subsequent communication between multi-link station and access point, or any other operation, over the respective communication link may be adjusted accordingly.

Exemplary embodiments may be advantageously applied to a process of scanning a communication environment by a multi-link station. In this context, the term "scanning" may denote a process of discovering whether one or more access points are available for potential communication in an environment of a multi-link station. In particular, scanning may be active scanning or passive scanning. During active scanning, a multi-link station may actively (or proactively) send an activity message (which may be denoted as "probe request") to potential access points in its environment. If an access point is present in the communication environment of the multi-link station, said access point (or a plurality of access points) may respond to the activity message ("probe request") so that the station knows which access point or which access points is or are presently available for potential wireless communication with the multi-link station. During passive scanning, the multi-link station may listen to the periodic beacons sent by the access point and infers the presence of the access point. While no reply of the multi-link station may be necessary in such embodiments, the multi-link station may understand that one or more access points is or are present for potential communication. During passive scanning, a station can simply listen without responding to the beacon(s).

One usage of a scanning process is during a roaming process. Roaming may describe scanning to discover one or more access points to which a multi-link station may be communicatively connected when moving the multi-link station (which may be a portable device such as a smart phone) from one location (at which the multi-link station may have been connected with an initial access point) to another location (at which the multi-link station may be subsequently connected with a target access point). Hence, roaming may describe a process executed by a station to transfer its connection from an initial access point to a target access point. In terms of roaming, scanning may be executed, as described above, including active and/or passive scanning.

In an embodiment, the method comprises and/or at least one of the multi-link station and the WiFi network is configured for transmitting the power management indicator before transitioning from an associated channel (which may be established between multi-link station and access point) to a scanning channel for scanning an environment for at least one further access point. An embodiment related to scanning is illustrated in FIG. 3B, discussed in more detail below. In this context, an "associated channel" may be a home channel via which the station has been previously connected and associated for providing a service, in particular by communication with an access point. In contrast to this, a "scanning channel" may be a channel on which a scanning process of a multi-link station is executed. When transitioning from a home channel (for instance for providing an assigned application) to a scanning channel (for scanning an environment of the station for access points as potential subsequent communication partner devices of the station), the multi-link station may send a multi-link power management indicator over one communication link only. Said multi-link power management indicator may define the power management state concerning at least two or preferably all communication links of the station. Hence, the time spent for sending power management-related data in a multi-link operation may be significantly reduced.

Still referring to the previously described embodiment, the power management indicator transmitted before transitioning from the associated channel to the scanning channel may indicate an energy-saving power management state (for example PM=1) in the first communication link and in the second communication link. More generally, said multi-link power management indicator may correspond to all links.

In an embodiment, the method comprises and/or at least one of the multi-link station and the WiFi network is configured for transmitting the power management indicator after leaving a scanning channel of scanning an environment for at least one further access point for entering (or re-entering) into an associated channel. Again referring to the previously described embodiment, even after returning from the scanning channel to the home channel after scanning, a multi-link power management indicator may be sent indicating for at least two or preferably all communication links a subsequent power management state.

Still referring to the previously described embodiment, the power management indicator sent after leaving the scanning channel for entering the associated channel may indicate an energy-consuming active communication power management state (for example PM=0) in the first communication link and in the second communication link. More generally, said multi-link power management indicator may correspond to all links.

In an embodiment, the method comprises and/or at least one of the multi-link station and the WiFi network is configured for transmitting the power management indicator before and/or after roaming between said access point and at least one further access point. In particular, roaming may denote a process carried out by or involving a mobile station discovering one or more access points as potential communication partner devices, in particular when moving from a spatial range around one access point to another spatial range around another access point. During roaming, a station and an access point may be connected by an automatically executed process, for instance for forming a base service set (BSS) network. Roaming may correspond to a transition from a communication connection of a multi-link station connected to an initial access point of an initial BSS to a communication connection of the multi-link station connected to another target access point of another target BSS. By transmitting a power management indicator via one link concerning another link and in particular defining the power management state of a plurality of links, the time spent for power management in terms of roaming may be significantly reduced. For example, rather than sending a power management indicator on each of a plurality of links, implementations of the systems discussed herein enable transmitting a single multi-link power management indicator, greatly reducing the transmission time required and allowing for faster switching to a new access point or link. Thus, the process of roaming may be accelerated.

In another embodiment, the method comprises and/or at least one of the multi-link station and the WiFi network is configured for transmitting the power management indicator before transitioning from an associated channel to another channel in conjunction with a concurrent mode of operation of providing different communication services to the multi-link station by time sharing. In this context, a concurrent mode of operation of providing different communication services to the multi-link station by time sharing may relate to a scenario in which at least a first communication service (for instance the use of a browser on the multi-link station) and a second service (for example streaming a video on the multi-link station) may be executed so that both communication services may be provided to the user of the multi-link station quasi-simultaneously. An embodiment related to a concurrent mode of operation is illustrated in FIG. 4B, discussed in more detail below. Scheduling of such a concurrent mode of operation may be executed efficiently when flexibly transmitting a power signal indicator concerning one communication link over another communication link, and preferably sending a multi-link power management indicator over one communication link for characterizing power management states for at least two or preferably for even all links.

Still referring to the previously described embodiment, the power management indicator transmitted before transitioning from the associated channel to the other channel in conjunction with the concurrent mode of operation may indicate an energy-saving power management state (for example PM=1) in the first communication link and in the second communication link. More generally, said multi-link power management indicator may correspond to all links.

In an embodiment, the method comprises and/or at least one of the multi-link station and the WiFi network is configured for transmitting a further power management indicator after the transitioning to the other channel, the further power management indicator indicating an energy-consuming active communication power management state (for example PM=0) with respect to the other channel. In particular, said further power management indicator may correspond to a communication link which has been entered after leaving the associated channel. Communication of the multi-link station via the other channel may be carried out with an entity different from the previously connected access point.

In an embodiment, the method comprises and/or at least one of the multi-link station and the WiFi network is configured for transmitting the power management indicator upon entering or re-entering from the aforementioned other channel into the associated channel in conjunction with the concurrent mode of operation of providing different communication services to the multi-link station by time sharing. In particular, the power management indicator transmitted upon (re-)entering from the other channel into the associated channel in conjunction with the concurrent mode of operation may indicate an energy-consuming active communication power management state in the first communication link and in the second communication link. Thus, when leaving the other channel and returning to the home channel, a multi-link power management indicator may be transmitted which may define a power management state in at least two and preferably in each of the communication links.

In an embodiment, the method comprises and/or at least one of the multi-link station and the WiFi network is configured for transmitting a further power management indicator before entering from the other channel into the associated channel, the further power management indicator indicating an energy-saving power management state (for example PM=1) with respect to the other channel. In particular, said further power management indicator may correspond to a communication link for which the associated channel will be re-entered after leaving the other channel.

In an embodiment, the method comprises and/or at least one of the multi-link station and the WiFi network is configured for transmitting the power management indicator in conjunction with at least one of an enhanced Multi-Link Single-Radio (eMLSR) operation, and a TDM (time-division multiplexing) Multi-Role operation.

With regards to a TDM Multi-Role operation, a concurrent mode of operation may be executed on either the same channel or communication link, or different channels or communication links. For a TDM Multi-Role system, the different channels or communication links may be supported through time division multiplexing (TDM) by shifting between channels or communication links back and forth. As an example for a TDM Multi-Role operation, a multi-link station (such as a smart phone) may connect to an access point and may transmit video data (e.g. streaming video, video conferencing, etc.) while a user of the multi-link station additionally uses a browser for accessing web pages or other content. In such a scenario, dual-channel communication can be carried out by TDM Multi-Role (wherein channels of different bands or of the same band may be used).

With regards to an enhanced Multi-Link Single-Radio (eMLSR) operation, a multi-link single-radio configuration be utilized in a scenario in which a station (or an access point) is able to transmit and receive over only one radio at a time. For example, eMLSR operations may enable a reduced function radio that only has the ability to tune to a single channel or sub-channel at a time to choose the best communication link for transmission, by allowing the device to send a single multi-link power management indicator on a channel to which it is tuned, rather than having to retune to each additional channel and send separate power management indicators.

In an embodiment, the method comprises and/or at least one of the multi-link station and the WiFi network is configured for transmitting a communication message from the multi-link station to the access point which includes a Media Access Control (MAC) header, and a subsequent data block, the data block comprising the power management indicator. Hence, said communication message may be a frame comprising a MAC header and a subsequent data block. Rather than utilizing a single power indicating bit in the MAC header relating specifically and only to the communication link by which the frame is transmitted, in many embodiments, there may be a multi-link power management bitmap which is included in the data block of the frame and which includes power management bits for a plurality of communication links. In particular, the power management bitmap may be indicative of power management in the communication link used for communicating the frame and in at least one other communication link. No power management information needs to be included in the MAC header.

In an embodiment, the method comprises and/or at least one of the multi-link station and the WiFi network is configured for transmitting communication messages between the multi-link station and a respective access point over the first communication link, over the second communication link, and over at least one further communication link between the multi-link station and at least one access point (and optionally at least one further communication entity). Hence, exemplary embodiments may use two, three or even more than three communication links for communicating between a multi-link station and an access point. This may enable an efficient communication with a high throughput of data. In some embodiments, a power management indicator transmitted via a first communication link may indicate power management states of at least two other communication links, for instance concerning a power management state of the above-mentioned second and third (or more) communication links.

In an embodiment, the method comprises and/or at least one of the multi-link station and the WiFi network is configured for transmitting communication messages over the first communication link and over the second communication link using at least one of the group comprising different communication frequencies, and different communication frequency bands. In embodiments, the different communication links may correspond to different communication frequencies of different bands and/or different channels of the same band.

In an embodiment, the method comprises and/or at least one of the multi-link station and the WiFi network is configured for transmitting communication messages over the first communication link and over the second communication link simultaneously or by time multiplexing. Thus, different communication links may be used at the same time, wherein different communication links may use different frequencies of transmitted signals. It is also possible to apply time division multiplexing (TDM) or similar scheduling for transmitting in different time slots over the various communication links.

In an embodiment, the method comprises and/or at least one of the multi-link station, the access point and the WiFi network is configured for transmitting communication messages between the multi-link station and the access point based on an IEEE 802.11 protocol or any suitable protocol, including draft protocols such as IEEE 802.1 1be.

In an embodiment, the method comprises and/or at least one of the multi-link station, the access point and the WiFi network is configured for transmitting communication messages over the first communication link and over the second communication link for at least one of the group comprising an internet application, a voice over internet protocol (VOIP) application, a peer to peer (p2p) application, and a gaming application. Thus, exemplary embodiments may enable efficient power management coordination on handheld devices, like smart phones, for video streaming or gaming applications. However, said applications are only exemplary, and many other applications are possible according to exemplary embodiments.

In an embodiment, the multi-link station is configured as single-radio station. Thus, an exemplary embodiment may support multiple links using a single radio. Hence, one radio may service two or more communication links. Alternatively, the multi-link station may also be a multi-radio station.

In an embodiment, the access point is configured as multi-link access point. Thus, the access point may be configured for communicating over at least two different communication links with a multi-link station.

According to exemplary embodiments, it may be possible to adapt both the station and an access point to provide them with the capability of generating, communicating and/or processing power management indicators over one communication link for specifying a power management state of at least one other communication link, and preferably (but not necessarily) for specifying a power management state also of the aforementioned communication link. When adapting a configuration of a station and/or of an access point to provide it or them with the described efficient power management capability, software and/or hardware of the station and/or of the access point may be adjusted correspondingly.

In applications relating to eMLSR connections, there may be only one radio servicing two communication links. However, many embodiments of eMSLR connections and protocols lack provisions for indicating a power management status for multiple links.

Additionally, many such embodiments not utilizing the systems and methods discussed herein experience a significant increase in roam/scan time with each new band or new channels in the spectrum, as the number of potential links (requiring separate power management indicator transmissions) increases.

Using a multi-link station, a multi-link operation may be possible in which a station can be associated in multiple links with the same access point and operating simultaneously on each link.

However, for a scan operation, in many embodiments, the station may need to retune a receiver or go away from the associated channel frequently for scanning other channels. When retuning from the associated channel, the station may send a power management indication to the access point indicating that the station is going to sleep or temporarily departing the channel and will be operated in an energy-saving mode. The station may send another power management indication to the access point while coming back to the associated channel indicating that the station will be operated in an energy-consuming active mode. In many embodiments, for each roam/scan in a multi-link operation associated mode, the station may send individual power management frames in each link to indicate the power save state of the corresponding link to the access point. For this, the station may switch to an individual channel of each associated link to send power management indications sequentially. However, sending management frames in each associated link while scheduling the scan channel may increase the scan/roam time due to time spent switching channels or sub-channels and transmitting each management frame.

According to exemplary embodiments, a multi-link station and/or an access point can provide a better roaming experience by decreasing the roam/scan time. This may be achieved in particular by indicating the power management status for a single or for multiple links using another operative link for transmitting said power management status, reducing or eliminating switching between links to transmit individual power management statuses for each link (e.g. retuning transmitters, generating new packets, etc.).

Hence, in many implementations, a power management state of multiple associated links may be communicated using a single frame containing information concerning power management states of each associated link using any one of the links for transmission.

For the example of scanning, the following process may be executed to finish the scan (for example for roaming) faster by using a multi-link power management indicator. To avoid time spent on sending multiple power management indicators, a non-AP (e.g. a station-type) MLD (multi-link device) can send a multi-link power management indicator on any one of the associated links to notify the power management states of each of a plurality of links to an AP (e.g. an access point-type) MLD (multi-link device). An exemplary process may be as follows:
1. While leaving an associated channel (which may also be denoted as home channel), it may be possible to indicate a power management state which may for example characterize an energy-saving state (e.g., PM=1) of all associated links by sending a multi-link power management frame in one of the links.
2. Thereafter, it may be possible to schedule a scan channel for a certain dwell time.
3. While re-entering the associated (or home) channel, it may be possible to indicate a power management state which may for example characterize an energy-consuming state (e.g., PM=0) of all associated links by sending a corresponding multi-link power management frame in one of the communication links.

Exemplary applications of such a multi-link power management transmission via one communication link are roaming and scanning, as well as eMLSR connections. In particular, exemplary embodiments may be advantageous for TDM Multi-Role applications, and in particular for a multi role device (for instance providing an eMLSR connection simultaneously with another connection). A skilled person will however understand that exemplary embodiments may be applied as well to completely different applications.

In particular, exemplary applications may be applied to any mechanism which specifies a power management state of multiple links in a single frame. Additionally alternatively, exemplary embodiments may be applied to any mechanism which specifies a power management state of a multiple link configuration with a single bit or using separate bits indicating the power management state of individual links. Furthermore, exemplary embodiments may be applied to any mechanism which allows to notify a power management state of a communication link on one band to another band. Beyond this, exemplary embodiments may be applied to any mechanism which allows a power management state of a communication link on one channel to be notified on another channel.

Advantageously, an exemplary embodiment may contribute to a decrease of the scan time (in particular roam time) as a power management state of multiple links may be indicated by using a single frame with a multi-link power management bitmap as power management indicator. Moreover, a corresponding embodiment may also help to efficiently utilize a transmission medium by reducing the channel switch and power management notification time in TDM (time-division multiplexing) Multi-Role like simultaneous operations like STA and Neighbor awareness Networking (NaN). In an exemplary embodiment, there may be a provision for indicating a power management status for a particular link, using a power management frame in another link in an eMLSR connection.

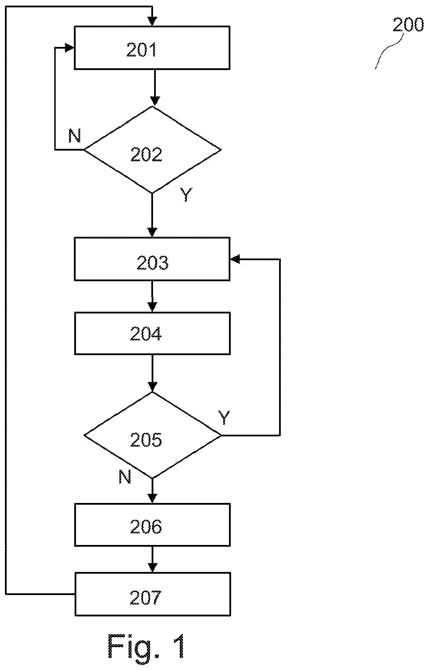

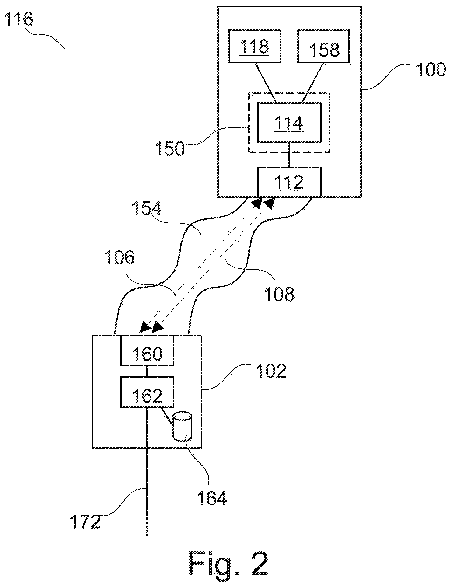

**FIG. 1** illustrates a flowchart 200 of a method for operating a multi-link station 100 and an access point 102 being configured for communicating with each other according to an exemplary embodiment. Concerning the reference signs used for the description of FIG. 1, reference is made in particular to FIG. 2 to FIG. 4B.

Referring to reference sign 201, the method comprises a multi-link station 100 and access point 102 establishing communications via a plurality of communication links, including at least a first communication link 106 and a second communication link 108. Establishing communications may comprise performing handshaking or synchronization procedures, configuration procedures, or any other such steps.

Referring to reference sign 202, the multi-link station 100 may determine whether to adjust power management of one or more links. Adjusting power management may be performed responsive to expiration of a timer, receipt of a trigger, or other such causes. In some implementations, power management may be adjusted to allow for scanning, roaming and transitioning between access points, for improved communications responsive to link conditions, or other such operations. If power management is not adjusted, then communications may continue and steps 201 and/or 202 may be repeated.

Responsive to determining to adjust power management settings, referring to reference sign 203, the multi-link station 100 may select a link (e.g. a first communication link 106). The link may be a first link or lowest numbered link (e.g. LINK0), or may be a first link that will be set to a reduced power or full power state, or may be a first link whose power management state will be modified, in various implementations.

Referring to reference sign 204, in some embodiments, the power state that the selected link will be in after power management operations may be recorded to a bitmap (e.g. by setting a predetermined bit corresponding to the link to a predetermined value corresponding to the power management state). In some implementations, only power states being changed may be added to the bitmap; in other implementations, only power states being changed to full power (or reduced power) may be added to the bitmap; in still other implementations, a power state for each link may be added to the bitmap.

Referring to reference sign 205, if there are additional links, then steps 203-204 may be repeated for each additional link.

Referring to reference sign 206, once the bitmap is complete, a multi-link power management indicator 104, 104' may be generated comprising the bitmap, and may be sent by the multi-link station 100 to the access point 102 as discussed above. The multi-link power management indicator 104, 104' may be transmitted via a single link, such as the first communication link 106, and may indicate the power management state of one or more additional links (e.g. second communication link 108).

Referring to reference sign 207, the method further comprises subsequently operating between the multi-link station 100 and the access point 102 in accordance with the received at least one power management indicator 104, 104'. This may include reducing power to corresponding link hardware (e.g. transmitters, receivers, amplifiers, filters, converters, processors, etc.), re-using links for other communications, increasing power or re-establishing links (e.g. for links returning from reduced power to full power states), or performing any other such functions.

**FIG. 2** illustrates a WiFi network 116 comprising an access point 102 being communicatively coupled with a multi-link station 100 according to an exemplary embodiment. Although not shown, at least one further access point may be present as well in an environment of the multi-link station 100, as well as other equipment (e.g. routers, switches, firewalls, gateways, or any other type and form of computing device or equipment).

The WiFi network 116 according to FIG. 2 comprises the access point 102 being presently communicatively coupled and hence associated with the multi-link station 100. Wireless communication between the access point 102 and the multi-link station 100 is indicated in FIG. 2 with reference sign 154, and may include any type and form of communication link (e.g. WiFi, cellular, Bluetooth, NFC, or any other communication protocol or combination of protocols). For example, multi-link station 100 may be configured to communicate over a first communication link 106 and over a second communication link 108 (shown in dashed line within wireless communications 154).

For example, multi-link station 100 may be a mobile device, such as a smart phone. For instance, multi-link station 100 may be configured as single-radio station, e.g. a station comprising only one radio. In particular, the multi-link station 100 may be configured for transmitting a power management indicator (see reference signs 104, 104' in FIG. 3B or FIG. 4B) to the access point 102 over the first communication link 106, wherein said power management indicator may be indicative of a power management state of the second communication link 108. Moreover, said power management indicator may be additionally indicative of a power management state of the first communication link 106. At least one further communication link may be involved in the mentioned power management coordination accordingly. Upon receipt of said power management indicator from the multi-link station 100 over the first communication link 106, the access point 102 may derive from the transmitted power management indicator the power management state of each of the first communication link 106 and of the second communication link 108 separately. For example, in some implementations, each link may correspond to a bit in the bitmap, and a value (e.g. 0 or 1) may correspond to a predetermined power management state (e.g. reduced power or full power). Accordingly, a bitmap such as "01100011" may indicate reduced power on links 2, 3, 7, and 8, and full power on links 1, 4, 5, and 6. Other bitmap implementations may be utilized. For example, in some implementations, the bitmap may comprise a {link, state} tuple or series of tuples (e.g. "{1,0},{2,1},{3,1},..."). In another implementation, the bitmap may consist of an identification of links in an energy saving mode (e.g. "2, 3, 7, 8") (or conversely, in a full power mode, e.g. "1, 4, 5, 6"). The access point 102 may hence be configured for processing the obtained power management indicator for deriving the respective power management state of the respective communication link 106, 108. For instance, the access point 102 may be configured for deriving a power management state of the first communication link 106 and of the second communication link 108 individually from the transmitted power management indicator. For example, the derived power management state of a respective communication link 106, 108 may be an energy-saving power management state (PM=1) in which the respective communication link 106, 108 communicatively coupling the multi-link station 100 with the access point 102 is in a doze or deactivated mode. Alternatively, the derived power management state of a respective communication link 106, 108 may be an energy-consuming active power management state (PM=0) in which the respective communication link 106, 108 communicatively coupling the multi-link station 100 with the access point 102 may be in an active data transmission mode. By sending a multi-link power management indicator over only one communication link 106 but including information about plural communication links 106, 108, the process of power management coordination may be rendered flexible and may be accelerated. After interpretation of the power management indicator by the access point 102 for deriving one or more power management states, a subsequent operation (in particular data communication) between the access point 102 and the multi-link station 100 may be executed in accordance with the received power management indicator (e.g. powering down disabled link hardware, re-utilizing reduced power link hardware for other links to other devices, etc.) and the power management states of the communication links 106, 108 defined therein.

In particular, the multi-link station 100 may be equipped with a monolithically integrated WiFi chip 150 (for instance manufactured in silicon technology) configured for controlling the process described above partially or entirely. Although the mentioned functionality may be implemented in WiFi chip 150 alone, other exemplary embodiments may provide said functionality in a plurality of cooperating chips. It is also possible that at least part of the power management functionality is realized at least partially by hardwired circuitry and/or at least partially by software.

As shown in FIG. 2, the multi-link station 100 may comprise a communication interface 112, such as at least one antenna (for instance a transmission antenna and/or a reception antenna, or a transmission and reception antenna) for wireless communication with the access point 102. Moreover, the multi-link station 100 may comprise processing circuitry 114 coupled to the communication interface 112 and configured for controlling execution of the above mentioned process. For example, the processing circuitry 114 may form part of the WiFi chip 150. Processing circuitry 114 may for example comprise one or more processors or cores. Apart from this, multi-link station 100 may comprise an input/output unit 158 (for instance a touchscreen) enabling a user to input data and/or instructions and/or enabling to display information to the user. One or more storage media 118 (for example at least one hard disk and/or at least one memory chip) may be provided in the multi-link station 100 for storing computer-useable instructions that, when used by the processing circuitry 114, cause the processing circuitry 114 to perform the above mentioned process.

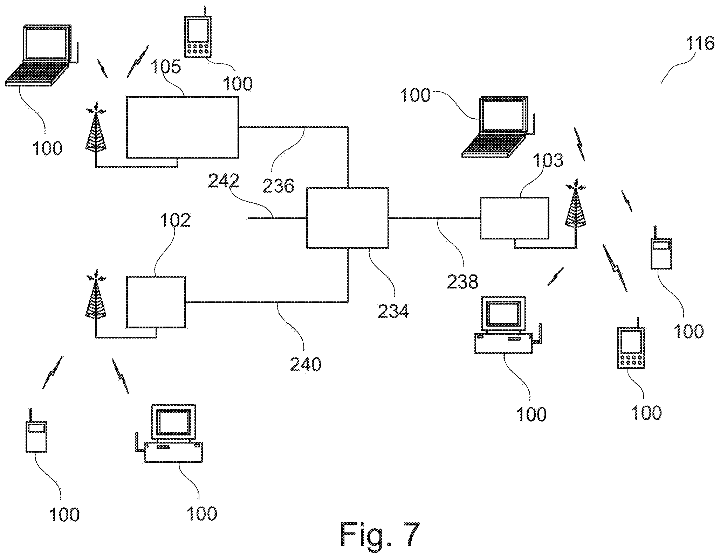

Access point 102 may be configured as multi-link access point. As shown as well in FIG. 2, access point 102 may comprise a communication interface 160, for instance comprising at least one antenna (for instance a transmission antenna and/or a reception antenna, or a transmission and reception antenna) for wireless communication with multi-link station 100. Furthermore, access point 102 may comprise processing circuitry 162 for executing processing tasks, and one or more storage media 164 for storing data. As indicated with reference sign 172, access point 102 may be communicatively coupled with other devices in a wireless or wired manner, see for example FIG. 7.

Multi-link station 100 and access point 102 may transmit communication messages over the first communication link 106 and over the second communication link 108 simultaneously or by time multiplexing (for instance time division multiplexing, TDM). Furthermore, communication messages may be exchanged between multi-link station 100 and access point 102 based on an IEEE 802.11 protocol. For instance, multi-link station 100 and access point 102 may cooperate for providing an internet application.

**FIG. 3B** illustrates communication over a WiFi network 116 (see FIG. 2) comprising an access point 102 and a multi-link station 100 according to an exemplary embodiment.

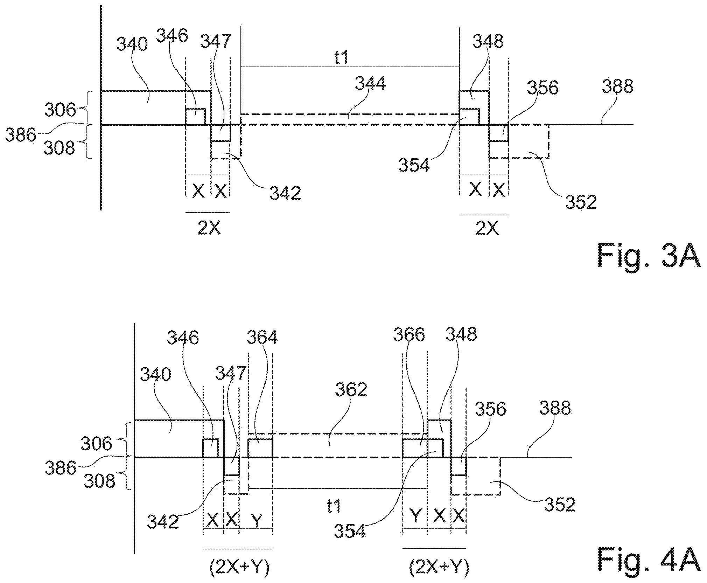

Before describing FIG. 3B in detail, problems solved by the embodiment of FIG. 3B will be explained referring to FIG. 3A.

**FIG. 3A** illustrates communication over a WiFi network comprising an access point and a multi-link station (both not shown) for comparison with the architecture according to FIG. 3B.

In FIG. 3A, communication along a time axis 388 using a radio 386 over a first communication link 306 and over a second communication link 308 is plotted. For instance, only a single radio 386 is provided. The radio 386 may be programmed to operate in one frequency band (for example at 2.4 GHz or 5 GHz). The station may then connect to the access point by a single band. The involved devices may support multiple bands. Data communication over the first communication link 306 using an associated channel (which may also be denoted as home channel) is indicated with reference sign 340, whereas data communication over the second communication link 308 is indicated with reference sign 342. During a time interval, t1, the first communication link 306 is used for a scanning operation 344. During a scanning operation 344, a station may try to find one or more access points nearby. For this purpose, a station may for example listen in all channels for signals from access points. The scanning operation 344 may be active (e.g. sending probe requests) or passive (e.g. listening for other signals on a channel). During said time interval, t1, radio 386 is available for discovering, roaming or scanning in another channel. Descriptively speaking, t1 corresponds to the time to scan a limited number of channels to not affect the latency and switch back to enhanced Multi-Link Single Radio (eMLSR) channels. After the scanning operation 344, communication switches from the scanning operation 344 into a data communication over the first communication link 306 in the associated channel (or home channel), see reference sign 348. Thereafter, communication switches to data communication over the second communication link 308 in the associated channel (or home channel), see reference sign 352.

As shown as well in FIG. 3A, a first power management indicator 346 is transmitted in the first communication link 306 at the end of the communication interval according to reference sign 340 and indicates a subsequent power management state of the first communication link 306, in particular indicating an energy-saving power management state (PM=1) in the first communication link 306. Furthermore, a second power management indicator 347 is subsequently transmitted in the second communication link 308 at the beginning of the communication interval according to reference sign 342 and indicates a power management state of the second communication link 308, in particular indicating an energy-saving power management state (PM=1) in the second communication link 308. As also shown in FIG. 3A, a third power management indicator 354 is transmitted in the first communication link 306 at the beginning of the communication interval according to reference sign 348 and indicates a power management state of the first communication link 306, in particular indicating an energy-consuming active power management state (PM=0) in the first communication link 306. Furthermore, a fourth power management indicator 356 is subsequently transmitted in the second communication link 308 at the beginning of the communication interval according to reference sign 352 and indicates a power management state of the second communication link 308, in particular indicating an energy-consuming active power management state (PM=0) in the second communication link 308. After fourth power management indicator 356, traffic may be handled in second communication link 308. As can be taken from FIG. 3A, the time needed for any of the serial four power management indicators 346, 347, 354, 356 is indicated by "X" (and although shown as equal or approximately equal time periods, each interval may be equal or unequal in various implementations). Hence, the time spent for power management coordination equals 4X in the implementation shown according to FIG. 3A. Thus, the time required for scanning is about t1+4X (although as noted above, other times may be utilized, e.g. X₁-X₄ for each of the indicators 346, 347, 354, 356, such that the total time is approximately t1+X₁+X₂+X₃+X₄, etc.).

Hence, in the scanning or roaming procedure according to FIG. 3A on an associated non-AP MLD (e.g. a multi-link device-type station), said non-AP MLD needs to go off channel (for example cannot use said channel temporarily) frequently for a short duration to dwell on each scan channel. In the illustrated procedure for scheduling a scan on a non-AP MLD STA, when leaving the associated (or home) channel, the non-AP MLD sends PM=1 frames on all active links 306, 308. Moreover, the procedure involves scheduling a scan channel for a dwell time corresponding to the time interval, t1. Furthermore, when entering again the associated channel (in particular home channel) after scanning, the non-AP MLD sends PM=0 frames on all associated links 306, 308.

Thus, while entering or leaving the scan channel corresponding to scanning operation 344, the process sends PM=1/PM=0 frames on all associated links 306, 308 which increases the scan time. In single radio operation, this time is further increased as for sending PM frames on each associated links 306, 308, the station needs to switch to the channel, send PM frames and then switch to next channel sequentially to send PM frames.

Concluding, a scanning process according to FIG. 3A takes a lot of time.

Coming back to the embodiment of FIG. 3B, a method for operating a multi-link station 100 and an access point 102, being communicatively coupled with each other as shown in FIG. 2 is illustrated, in which a scanning time (in particular roaming time) can be significantly reduced in comparison with the approach according to FIG. 3A.

In FIG. 3B, communication along a time axis 188 using a radio 186 over a first communication link 106 (above time axis 188) and over a second communication link 108 (below time axis 188) is plotted. For instance, only a single radio 186 is provided. The radio 186 may be programmed to operate in one frequency band (for example at 2.4 GHz or 5 GHz). The multi-link station 100 may then connect to the access point 102 by a single band. The involved devices may support multiple bands. Data communication between the multi-link station 100 and the access point 102 over the first communication link 106 may be carried out using an associated active channel 110 (which may also be denoted as home channel), whereas data communication between the multi-link station 100 and the access point 102 over the second communication link 108 is also possible, but is not illustrated in FIG. 3B. The active channel 110 may be the channel with which the multi-link station 100 is presently associated. During a time interval, t1, the first communication link 106 is used for a scanning operation in a scanning channel 130. For instance, the active channel 110 on the one hand and the scanning channel 130 on the other hand may operate at different frequency values. During scanning by scanning channel 130, a multi-link station 100 may try to find one or more access points nearby. For this purpose, a multi-link station 100 may listen in all channels for signals from access points. More generally, the scanning process using scanning channel 130 may be active or passive. During said time interval, t1, radio 186 is available for discovering, roaming or scanning in another channel. Descriptively speaking, t1 corresponds to the time to scan a limited number of channels to not affect the latency and switch back to eMLSR channels. After scanning using scanning channel 130, communication switches back to active channel 110 for subsequent data communication over the first communication link 106 in the associated active channel 110 (or home channel).

As shown as well in FIG. 3B, a first power management indicator 104 is transmitted in the first communication link 106 at the end of the communication interval using the active channel 110 prior to scanning and indicates a power management state of the first communication link 106 and of the second communication link 108, in particular indicating an energy-saving power management state (PM=1) in both the first communication link 106 and the second communication link 108. Thus, the power management indicator 104 transmitted before transitioning from the associated active channel 110 to the scanning channel 130 for scanning an environment for at least one further access point may indicate an energy-saving power management state both for the first communication link 106 and for the second communication link 108. Descriptively speaking, the first power management indicator 104 may be denoted as multi-link power management indicator.

Furthermore, a second power management indicator 104' is subsequently transmitted in the first communication link 106 using the active channel 110 after completing scanning and indicates a power management state for both the first communication link 106 and for the second communication link 108, in particular indicating an energy-consuming active power management state (PM=0) in both the first communication link 106 and the second communication link 108. Hence, the power management indicator 104' transmitted after leaving the scanning channel 130 of scanning the environment for at least one further access point for re-entering into the associated channel 110 may indicate an energy-consuming active communication power management state in the first communication link 106 and in the second communication link 108. Descriptively speaking, the second power management indicator 104' may be denoted as further multi-link power management indicator.

Advantageously, it may be sufficient for a reliable power management coordination to transmit only two power management indicators 104, 104' from multi-link station 100 to access point 102 before and after scanning, for instance roaming. No additional power management indicators need to be transmitted in the embodiment according to FIG. 3B. As can be taken from FIG. 3B, the time needed for any of the two power management indicators 104, 104' is indicated by "X". Hence, the time spent for power management coordination equals to 2X according to FIG. 3B. Thus, the time required for scanning is about t1+2X. As compared to the architecture according to FIG. 3A, two power management indicators may be omitted in the embodiment of FIG. 3B, and the time required for scanning and power management coordination altogether may be significantly reduced.

The acceleration of the scanning (for instance roaming) process according to FIG. 3B may be achieved by transmitting multi-link power management indicators 104, 104' between the multi-link station 100 and the access point 102 over the first communication link 106, wherein the power management indicators 104, 104' are indicative of a power management state of the second communication link 108 and being also indicative of a power management state of the first communication link 106. For instance, any of said power management indicators 104, 104' may be a single power management bit indicating the power management state of both the first communication link 106 and the second communication link 108. Alternatively, any of said power management indicators 104, 104' may be a sequence of power management bits each indicating the power management state of an assigned one of the first communication link 106 and the second communication link 108 (for instance when being different). In particular, it may be advantageous to transmit the respective power management indicator 104, 104' from the multi-link station 100 to the access point 102 as a single power management frame.

Hence, the roam (or other kind of scan) executed according to FIG. 3B with multi-power management indicators 104, 104' may avoid time spent for sending multiple power management indicator 346, 347, 348, 356. In other words, non-AP MLD in form of multi-link station 100 may advantageously send multi-link power management indicators 104, 104' on any one of the associated communication links 106, 108 to notify power management states for all communication links 106, 108 together to an AP MLD in form of access point 102.

In many implementations, a corresponding power management state of all associated communication links 106, 108 may be indicated by sending a multi-link power management indicator 104 with a certain power management state (PM=1 in the shown embodiment) as a frame in one of the communication links 106, 108 (e.g. in communication link 106 in the shown embodiment). Thereafter, it may be possible to schedule scanning in scan channel 130 for a dwell time, t1. Again, t1 may denote the time to scan a limited number of channels to not affect the latency and switch back to eMLSR channels. While re-entering the associated active channel 110 (home channel), it may be possible to indicate a certain power management state (PM=0 in the shown embodiment) of all associated communication links 106, 108 by sending a multi-link-frame in form of power management indicator 104' in one of the communication links 106, 108 (e.g. communication link 106 in the shown embodiment).

The following example shows the time saving when two communication links indicate a power save mode for scanning (in particular roaming):

In this example, it is assumed that a total number of channels in a certain country is "Y". For example in some implementations, 178 channels may be available (e.g., a value Y=178). Furthermore, a number of time slots "t1" scheduled to complete scanning in Y channels may be "Z". Each time slot t1 may indicate the time that is used to schedule scan channels 130 without affecting latency and switch back to home channel, associated channel or active channel 110.

In the described scenario, the time spent to send power management frames per time slot t1 without multi-link-power management indication (compare FIG. 3A) may be 4X, wherein "X" is the time taken to indicate PM=1 or PM=0 in a single communication link 306, 308.

In contrast to this, the time spent to send power management frames per time slot t1 with multi-link-power management indication according to an exemplary embodiment (compare FIG. 3B) may be 2X, wherein "X" is the time taken to indicate PM=1 or PM=0 in a single communication link 106, 108.

The total scan time can be calculated as follows: (number of time slots t1 scheduled)^{∗}(t1+time spent to indicate power management state per time slot t1)

Without multi-link-power management indication according to the process of FIG. 3A, the total scan time is: Z^{∗}(t1+4X)

With multi-link-power management indication according to the exemplary embodiment of FIG. 3B, the total scan time is: Z^{∗}(t1+2X)

For an example of 100 active channels, a typical value of "Z" may be 50. Concluding, the time-saving may be particularly pronounced with a relatively large number of links requiring to indicate a power save mode (or a power consuming mode).

**FIG. 4B** illustrates communication over a WiFi network 116 (see FIG. 2) comprising an access point 102 and a multi-link station 100 according to another exemplary embodiment.

Before describing FIG. 4B in detail, problems solved by the embodiment of FIG. 4B will be explained referring to FIG. 4A.

**FIG. 4A** illustrates communication over a WiFi network comprising an access point and a multi-link station (both not shown) for comparison with the architecture according to FIG. 4B.

In FIG. 4A, communication along time axis 388 with radio 386 over first communication link 306 and over second communication link 308 is plotted. Data communication over the first communication link 306 using an associated channel (which may also be denoted as home channel) is indicated with reference sign 340, whereas data communication over the second communication link 308 is indicated with reference sign 342. During time interval, t1, the first communication link 306 is used for a time division multiplexing (TDM) operation 362. During the time division multiplexing operation 362, an additional task or an additional service may be executed (for instance video watching using the multi-link station), whereas the multi-link station executes another task as well (for instance browsing). Thus, during said time interval, t1, radio 386 is available for any desired TDM operation. After the time division multiplexing operation 362, communication switches back to data communication over the first communication link 306 in the associated channel (or home channel), see reference sign 348. Thereafter, communication switches to data communication over the second communication link 308 in the associated channel (or home channel), see reference sign 352.

Again referring to FIG. 4A, communication according to reference sign 340 relates to communication between the multi-link station and the access point over the first communication link 306. Communication according to reference sign 362 relates to communication between the multi-link station and another communication partner over the first communication link 306. The same first communication link 306 may be used for different channels (e.g. a first channel relating to the communication according to reference sign 340 and a second channel relating to communication according to reference sign 362). Moreover, communication according to reference sign 352 relates to communication between the multi-link station and the access point over the second communication link 308.

As shown as well in FIG. 4A, first power management indicator 346 is transmitted in the first communication link 306 at the end of the communication interval according to reference sign 340 and indicates a power management state of the first communication link 306, in particular indicating an energy-saving power management state (PM=1) in the first communication link 306. Furthermore, second power management indicator 347 is subsequently transmitted in the second communication link 308 at the beginning of the communication interval according to reference sign 342 and indicates a power management state of the second communication link 308, in particular indicating an energy-saving power management state (PM=1) in the second communication link 308. As also shown in FIG. 4A, third power management indicator 354 is transmitted in the first communication link 306 at the beginning of the communication interval according to reference sign 348 and indicates a power management state of the first communication link 306, in particular indicating an energy-consuming active power management state (PM=0) in the first communication link 306. Furthermore, fourth power management indicator 356 is subsequently transmitted in the second communication link 308 at the beginning of the communication interval according to reference sign 352 and indicates a power management state of the second communication link 308, in particular indicating an energy-consuming active power management state (PM=0) in the second communication link 308. After fourth power management indicator 356, traffic may be handled in second communication link 308. Moreover, a fifth power management indicator 364 is transmitted as the beginning of the time division multiplexing operation 362, and a sixth power management indicator 366 is transmitted at the end of the time division multiplexing operation 362. The fifth power management indicator 364 may indicate an energy-consuming active power management state (PM=0) for TDM connection with multi-link connection. The sixth power management indicator 366 may indicate an energy-saving power management state (PM=1) for TDM connection with multi-link connection. Hence, a large number of power management indicators 346, 347, 354, 356, 364, 366 have to be sent sequentially according to FIG. 4A. As can be taken from FIG. 4A, the time needed for any of the four power management indicators 346, 347, 354, 356 is indicated by "X" in the illustrated implementation (though unequal time periods may be required in some implementations). Furthermore, the time needed for any of the two additional power management indicators 364, 366 is indicated by "Y" in the illustrated implementation (though unequal time periods may be required in some implementations). Hence, the time spent for power management coordination equals to 4X+2Y according to FIG. 4A.

The communication architecture according to FIG. 4A relates to a TDM Multi-Role or eMLSR scenario. For scheduling a TDM Multi-Role connection with multi-link station 100 embodied as non-AP MLD STA, the following process may be carried out: When leaving the associated channel according to reference sign 340 (which may also be denoted as home channel), the non-AP MLD may send PM=1 frames on all active links 306, 308. A PM=0 power management indicator may be sent while scheduling a connection that carries out time sharing with the multi-link connection. Furthermore, a power management indicator PM=1 may be sent while leaving the connection that experiences time sharing with the multi-link connection. When re-entering the associated (or home) channel, the non-AP MLD may send PM=0 frames on all associated links 306, 308.

Concluding, the TDM process according to FIG. 4A takes a lot of time.

Coming back to the embodiment of FIG. 4B, an improved TDM Multi-Role or eMLSR process comprises transmitting a power management indicator 104 before transitioning from associated channel 110 to other channel 120 in conjunction with a concurrent mode of operation of providing different communication services (such as browsing and video streaming) using the multi-link station 100 by time sharing. The power management indicator 104 may be denoted as multi-link power management indicator which indicates an energy-saving power management state (PM=1) both in the first communication link 106 and in the second communication link 108 and is transmitted via the first communication link 106 only. Moreover, power management indicator 104' is transmitted via first communication channel 106 upon re-entering, from the other channel 120, into the associated channel 110. Said power management indicator 104' indicates an energy-consuming active communication power management state (PM=0) both in the first communication link 106 and in the second communication link 108 and is transmitted via the first communication link 106 only. Said multi-link power management indicators 104, 104' are transmitted in conjunction with the enhanced Multi-Link Single-Radio (eMLSR)/ TDM (time-division multiplexing) Multi-Role operation according to FIG. 4B. To put it shortly, a TDM Multi-Role/eMLSR operation may be carried out using multi-link-power management indicators 104, 104' each transmitted over a single communication link only (106 in the shown embodiment) but comprising power management information concerning all communication links 106, 108.

As can be taken from FIG. 4B as well, a further power management indicator 122 is transmitted after the transitioning to the other channel 120, wherein the further power management indicator 122 indicates an energy-consuming active communication power management state (PM=0) with respect to the other channel 120. Correspondingly, yet another power management indicator 123 is transmitted via the other channel 120 before re-entering, from the other channel 120, into the associated active channel 110. In the shown embodiment, the other power management indicator 123 indicates an energy-saving power management state (PM=1) with respect to the other channel 120.

It may be sufficient for a reliable power management coordination to transmit multi-link power management indicators 104, 104' only before and after communicating in the other channel 120, and to transmit the further power management indicators 122, 123 related to the other channel 120 only. No additional power management indicators need to be transmitted in the embodiment according to FIG. 4B. As can be taken from FIG. 4B, the time needed for any of the two power management indicators 104, 104' is indicated by "X". Furthermore, the time needed for any of the two further power management indicators 122, 123 is indicated by "Y". Hence, the time spent for power management coordination equals to 2X+2Y according to FIG. 4B. As compared to the architecture according to FIG. 4A, two power management indicators may be omitted in the embodiment of FIG. 4B by replacing a time-consuming sequential transmission of power management indicators by efficient multi-link power management indicators. Consequently, the time required for TDM operation and power management coordination altogether may be significantly reduced.

In the following, the procedure for scheduling a TDM Multi-Role connection on non-AP MLD STA in form of multi-link station 100 with multi-link-power management indicators 104, 104' according to FIG. 4B will be explained: A power management state PM=1 may be indicated for all communication links 106, 108 using multi-link-power management frames with power management states PM=1 on any one of the communication links 106, 108 on the non-AP MLD-type multi-link station 100 while leaving the associated active channel 110. It may then be possible to schedule a connection that needs to time share with the multi-link connection. A power management state PM=0 may then be indicated for all the links 106, 108 using multi-link-power management frames according to power management state PM=0 on any one of the links 106, 108 on the non-AP MLD, e.g. multi-link station 100, while re-entering the associated active channel 110.

Advantageously, the time spent on the channel may be reduced due to a removal of an additional power management exchange overhead.

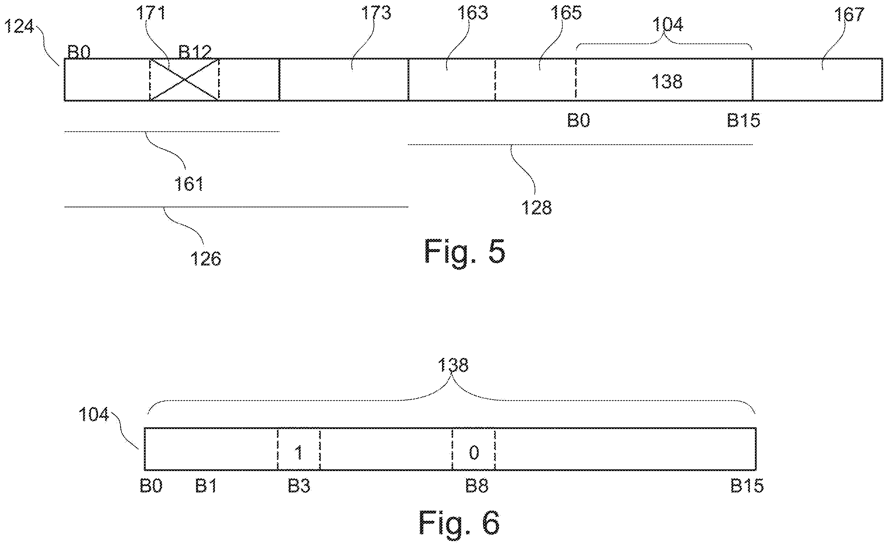

**FIG. 5** illustrates a communication message 124 in form of a frame transmitted over a WiFi network 116 from a multi-link station 100 to an access point 102 according to an exemplary embodiment. **FIG. 6** illustrates a power management bitmap 138 forming part of a data block 128 of the communication message 124 of FIG. 5.

More specifically, the communication message 124 of FIG. 5 includes a Media Access Control (MAC) header 126, and subsequent data block 128, the latter comprising the power management indicator 104. The MAC header 126 may comprise address fields. Part of the MAC header 126 is a frame control block 161. Another part 173 of the MAC header 126 following the frame control block 161 may comprise address information. The frame control block 161 may indicate the type of frame being transmitted (for instance a management frame, a data frame, etc.). The data block 128 comprises a category field 163 followed by an organization identifier 165, the power management indicator 104, and a frame control checksum in form of Frame Check Sequence (FCS) 167. Category field 163 may be indicative of a type of frame being transmitted. The organization identifier 165 may identify a vendor and may hence be different for different vendors. The FCS 167 may allow the receiver of the communication message 124, e.g. an access point 102, to check whether the frame has been received correctly. For example, the data block 128 may be a vendor specific action frame to initiate multi-link power management. For this purpose, the power management indicator 104 may be configured as multi-link power management bitmap 138.

Still referring to the communication message 124 of FIG. 5, reference sign 171 shows a bit labelled B12 which is crossed out. The bit labelled B12 may provide power management information concerning a link through which said bit is transmitted. In embodiments, the bit labelled B12 may be omitted in the MAC header 126, and may be substituted by the multi-link power management bitmap 138 according to power management indicator 104.

The construction of said multi-link power management bitmap 138 is illustrated in further detail in FIG. 6. As shown in FIG. 6, the multi-link power management bitmap 138 representing the power management indicator 104 may correspond to a sequence of bits. For instance, a bit labelled B3 has a logical value "1" and may indicate a power management state PM=1, e.g. an energy-saving mode. For example, a bit labelled B8 has a logical value "0" and may indicate a power management state PM=0, e.g. an energy-consuming active mode. In the example of FIG. 6, the power management indicator 104 comprises 16 bits labelled B0 to B 15. For example, the bit labelled B0 may correspond to LINK0 (e.g. first communication link 106), the bit labelled B1 may correspond to LINK1 (e.g. second communication link 108), and so on. Hence, the 16 bit configuration of the multi-link power management bitmap according to FIG. 6 may support up to 16 different communication links. Other configurations may be utilized (e.g. 2 bits, 4 bits, 8 bits, 32 bits, 64 bits, or any other such value, or other types of bitmaps as discussed above).

Again referring to FIG. 5, a mechanism to convey a multi-link-power management indicator 104 is illustrated. Any mechanism may be used for this purpose which may specify a power management state of multiple communication links 106, 108,... as a whole or individually. An example mechanism may use a vendor specific frame to convey the multi-link-power management indicator 104. The vendor specific action frame indicates a bitmap of power save mode of individual links. Bit B 12 in MAC header 126, which is a power management bit, will be not used to indicate a power save mode. In contrast to this, the power management state of the various links 106, 108, ... is indicated in the multi-link-power management bitmap 138. In some implementations, a flag or predetermined bit in a packet header options field may be set to indicate that power management bitmap 138 should be used instead of the power management bit in the MAC header. In other implementations, multi-link-power management may be enabled during initial setup of communications or when starting a packet flow.

FIG. 6 illustrates the frame format of the action frame to indicate the multi-link power management indicator 104. In the illustrated multi-link power management bitmap 138, B0 corresponds to LINK 0, B1 corresponds to LINK 1,... . A link corresponding bit in the multi-link-power management element being "1" may indicate that the link continues or enters a power management state PM=1. A link corresponding bit in multi-link-power management element being "0" may indicate that the link continues or enters in power management state PM=0.

**FIG. 7** is a diagram illustrating an embodiment of a wireless communication system, e.g. WiFi network 116, in which some aspects of the subject technology can be implemented. The WiFi network 116 includes access points 102, 103 105; wireless communication devices embodied as wireless stations 100 (STAs); and a network hardware component 234. The wireless stations 100 may be laptop computers, or tablets, personal digital assistants, personal computers, and/or cellular telephones. Other examples of such stations 100 can also or alternatively include other types of devices that contain wireless communication capability. In the embodiment of FIG.7, peer-to-peer (p2p) devices may be implemented as well. This may be advantageous, for example, for screen mirroring or miracast applications, also with a TV.

Some examples of stations 100 that may be implemented to operate in accordance with any of the various examples, embodiments, options, and/or their equivalents, etc., described herein may include, but are not limited to, appliances within homes and businesses, etc., such as refrigerators, microwaves, heaters, heating systems, air conditioners, air conditioning systems, lighting control systems, and/or any other types of appliances, etc.; meters such as for natural gas service, electrical service, water service, internet service, cable and/or satellite television service, and/or any other types of metering purposes, etc.; devices wearable on a user or person, including watches, monitors such as those that monitor activity level, bodily functions such as heartbeat, breathing, and bodily activity, bodily motion or lack thereof, etc.; medical devices including intravenous medicine delivery-monitoring and/or controlling devices, blood-monitoring devices (e.g., glucose-monitoring devices) and/or any other types of medical devices, etc.; premises-monitoring devices such as movement-detection/monitoring devices, door closed/ajar detection/monitoring devices, security/alarm system monitoring devices, and/or any other type of premises-monitoring devices; multimedia devices including televisions, computers, audio playback devices, video playback devices, and/or any other type of multimedia devices, etc.; and/or generally any other type(s) of device(s) that include(s) wireless communication capability, functionality, circuitry, etc. In general, any device that is implemented to support wireless communications may be implemented as station 100 to operate in accordance with any of the various examples, embodiments, options, and/or their equivalents, etc., described herein.

The access points (APs) 102, 103, 105 are operably coupled to the network hardware 234 via local area network (LAN) connections 236, 238, and 240. The network hardware 234, which may be a router, switch, bridge, modem, system controller, etc., provides a wide area network (WAN) connection 242 for the communication system of FIG. 7. Each of the access points 102, 103, 105 may have an associated antenna or antenna array to communicate with the wireless communication devices in its area. Typically, the wireless communication devices register with a particular access point 102, 103, 105 to receive services from the communication system. For direct connections (e.g., point-to-point communications), wireless communication devices communicate directly via an allocated channel. Any of the various wireless communication devices or stations 100 and APs 102, 103, 105 may include a processing circuitry and/or a communication interface to support communications with any other of the wireless communication devices or stations 100 and APs 102, 103, 105. In an example of operation, a processing circuitry and/or a communication interface implemented within one of the devices (e.g., any one of the stations 100 and APs 102, 103, 105) is configured to process at least one signal received from and/or to generate at least one signal to be transmitted to another one of the devices (e.g., any other one of the stations 100 and APs 102, 103, 105).

The processing circuitry and/or the communication interface of any one of the various stations 100 and APs 102, 103, 105, may be configured to support communications with any other of the various devices, stations 100 and APs 102, 103, 105. Such communications may be uni-directional or bi-directional between devices. Also, such communications may be uni-directional between devices at one time and bi-directional between those devices at another time.

In an example, a device (e.g., any one of the stations 100 and APs 102, 103, 105) includes a communication interface and/or a processing circuitry (and possibly other possible circuitries, components, elements, etc.) to support communications with other device(s) and to generate and process signals for such communications. The communication interface and/or the processing circuitry operate to perform various operations and functions to effectuate such communications (e.g., the communication interface and the processing circuitry may be configured to perform certain operation(s) in conjunction with one another, cooperatively, dependently with one another, and other operation(s) separately, independently from one another). In some examples, such a processing circuitry includes all capability, functionality, and/or circuitry, etc., to perform such operations as described herein. In some other examples, such a communication interface includes all capability, functionality, and/or circuitry, etc., to perform such operations as described herein. In even other examples, such a processing circuitry and a communication interface include all capability, functionality, and/or circuitry, etc., to perform such operations as described herein, at least in part, cooperatively with one another.

Implementations within the scope of the present disclosure can be partially or entirely realized using a tangible computer-readable storage medium (or multiple tangible computer-readable storage media of one or more types) encoding one or more instructions. The tangible computer-readable storage medium also can be nontransitory in nature.

The computer-readable storage medium can be any storage medium that can be read, written, or otherwise accessed by a general purpose or special-purpose computing device, including any processing electronics and/or processing circuitry capable of executing instructions. For example, without limitation, the computer-readable medium can include any volatile semiconductor memory, such as RAM, DRAM, SRAM, TRAM, Z-RAM and TTRAM. The computer-readable medium also can include any nonvolatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG and Millipede memory.

Further, the computer-readable storage medium can include any nonsemiconductor memory such as optical disk storage, magnetic disk storage, magnetic tape, other magnetic storage devices or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or nonexecutable machine code or as instructions in a high-level language that can be compiled to produce executable or nonexecutable machine code. Further, instructions also can be realized as or can include data. Computer-executable instructions also can be organized in any format, including routines, subroutines, programs, data structures, objects, modules, applications, applets and functions, etc. As recognized by those of skill in the art, details including, but not limited to, the number, structure, sequence, and organization of instructions can vary significantly without varying the underlying logic, function, processing and output.

It should be noted that certain passages of this disclosure may reference terms such as "first" and "second" in connection with devices, mode of operation, transmit chains, etc., for purposes of identifying or differentiating one from another or from others. These terms are not intended to merely relate entities (for instance, a first device and a second device) temporally or according to a sequence, although in some cases, these entities may include such a relationship. Nor do these terms limit the number of possible entities (for instance, devices) that may operate within a system or environment.

While the foregoing written description of the methods and systems enables one of ordinary skill to make and use what is considered presently to be the best mode thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

Having now described some illustrative embodiments, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed only in connection with one implementation are not intended to be excluded from a similar role in other embodiments or embodiments.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate embodiments comprising the items listed thereafter exclusively. In one implementation, the systems and methods described herein consist of one, each combination of more than one, or all of the described elements, acts, or components.

Any references to embodiments or elements or acts of the systems and methods herein referred to in the singular can also embrace embodiments including a plurality of these elements, and any references in plural to any implementation or element or act herein can also embrace embodiments including only a single element. References in the singular or plural form are not intended to limit the presently disclosed systems or methods, their components, acts, or elements to single or plural configurations. References to any act or element being based on any information, act or element can include embodiments where the act or element is based at least in part on any information, act, or element.

Any implementation disclosed herein can be combined with any other implementation, and references to "an implementation," "some embodiments," "an alternate implementation," "various implementation," "one implementation" or the like are not necessarily mutually exclusive and are intended to indicate that a particular feature, structure, or characteristic described in connection with the implementation can be included in at least one implementation. Such terms as used herein are not necessarily all referring to the same implementation. Any implementation can be combined with any other implementation, inclusively or exclusively, in any manner consistent with the aspects and embodiments disclosed herein.

References to "or" can be construed as inclusive so that any terms described using "or" can indicate any of a single, more than one, and all of the described terms.

Where technical features in the drawings, detailed description or any claim are followed by reference signs, the reference signs have been included for the sole purpose of increasing the intelligibility of the drawings, detailed description, and claims. Accordingly, neither the reference signs nor their absence have any limiting effect on the scope of any claim elements.

The systems and methods described herein can be embodied in other specific forms without departing from the characteristics thereof. The foregoing embodiments are illustrative rather than limiting of the described systems and methods. The scope of the systems and methods described herein can thus be indicated by the appended claims, rather than the foregoing description, and changes that come within the meaning and range of equivalency of the claims are embraced therein.

## Claims

1. A method for operating a multi-link station and an access point being configured for communicating with each other, wherein the method comprises
transmitting a power management indicator between the multi-link station and the access point over a first communication link, the power management indicator being indicative of a power management state of a second communication link; and
subsequently communicating between the multi-link station and the access point in accordance with the power management indicator.

2. The method according to claim 1, wherein
said power management indicator is also indicative of a power management state of the first communication link;
wherein in particular
said power management indicator comprises one of the group comprising a single power management bit indicating the power management state of both the first communication link and the second communication link, and a sequence of power management bits each indicating the power management state of an assigned one of the first communication link and the second communication link.

3. The method according to claim 1 or 2, wherein the method comprises
transmitting the power management indicator from the multi-link station to the access point before switching to or after switching from another operation mode of the multi-link station during which the multi-link station communicates with another entity than said access point.

4. The method according to any one of the claims 1 to 3, wherein the method comprises
transmitting the power management indicator as a single power management frame.

5. The method according to any one of the claims 1 to 4, wherein
the power management indicator is indicative of an energy-saving power management state or is indicative of an energy-consuming active communication power management state;
and/or wherein
the power management indicator is additionally indicative of a power management state of one or more further communication links.

6. The method according to any one of the claims 1 to 5, wherein the method comprises
transmitting the power management indicator before transitioning from an associated channel to a scanning channel for scanning an environment for at least one further access point.

7. The method according to any one of the claims 1 to 6, wherein the method comprises
transmitting the power management indicator after leaving a scanning channel of scanning an environment for at least one further access point for entering into an associated channel.

8. The method according to any one of the claims 1 to 7, wherein the method comprises
transmitting the power management indicator before and/or after roaming between said access point and at least one further access point.

9. The method according to any one of the claims 1 to 8, wherein the method comprises
transmitting the power management indicator before transitioning from an associated channel to another channel in conjunction with a concurrent mode of operation of providing different communication services to the multi-link station by time sharing;
wherein in particular the method comprises
transmitting a further power management indicator after the transitioning to the other channel, the further power management indicator indicating an energy-consuming active communication power management state with respect to the other channel.

10. The method according to any one of the claims 1 to 9, wherein the method comprises
transmitting the power management indicator upon entering from another channel into an associated channel in conjunction with a concurrent mode of operation of providing different communication services to the multi-link station by time sharing;
wherein in particular the method comprises
transmitting another power management indicator before entering from the other channel into the associated channel, the other power management indicator indicating an energy-saving power management state with respect to the other channel.

11. The method according to any one of the claims 1 to 10, wherein the method comprises
transmitting the power management indicator in conjunction with at least one of an enhanced Multi-Link Single-Radio operation, and a Time-division multiplexing Multi-Role operation;
and/or wherein the method comprises
transmitting a communication message from the multi-link station to the access point which includes a Media Access Control header, and a subsequent data block comprising the power management indicator.

12. A multi-link station configured for communicating with an access point, wherein the multi-link station comprises:
a communication interface; and
processing circuitry coupled to the communication interface and configured for:
transmitting a power management indicator between the multi-link station and the access point over a first communication link, the power management indicator being indicative of a power management state of a second communication link and communications via second communication link being handled in accordance with the power management indicator.

13. An access point configured for communicating with a multi-link station, wherein the access point comprises:
a communication interface; and
processing circuitry coupled to the communication interface and configured for:
receiving a power management indicator from the multi-link station over a first communication link, the power management indicator being indicative of a power management state of a second communication link; and
subsequently operating with the multi-link station in accordance with the received power management indicator.

14. A WiFi chip for a multi-link station configured for communicating with an access point, wherein the WiFi chip is configured for transmitting a power management indicator between the multi-link station and the access point over a first communication link, the power management indicator being indicative of a power management state of a second communication link.

15. A WiFi network, comprising:
a multi-link station; and
an access point;
wherein the access point and the multi-link station are configured for:
transmitting a power management indicator from the multi-link station to the access point over a first communication link, the power management indicator being indicative of a power management state of a second communication link; and
subsequently operating between the multi-link station and the access point in accordance with the received power management indicator.
